# EUROPEAN PATENT APPLICATION

(11) **EP 2 894 020 A1**
(43) Date of publication of application: **15.07.2015**
(21) Application number: 14200103.1
(22) Date of filing: 23.12.2014
(51) Int. Cl.: B29C 45/44, B29C 45/64, B29C 45/26, B29L 31/56

(54) **A demolding mechanism of a plastic bottle cap mold and a method therefor**

(30) Priority: 31.12.2013 CN 201310752929
(71) Applicant: Everfinest Precision Machinery (Shenzhen) Co., Ltd., Shenzhen, Guangdong 518111 (CN)
(72) Inventor: Lau, Kwong Fat, 518111 SHENZHEN (CN)
(74) Representative: Karakatsanis, Georgios

(57) **Abstract**

A demolding mechanism of a plastic bottle cap mold provided on a movable portion of the plastic bottle cap mold; the demolding mechanism comprises a supporting and place-giving device; the supporting and place-giving device is disposed corresponding to cores in the movable portion which are used for demolding; each of the cores is fixed at a molding position during injection of a bottle cap and retreats during demolding of the plastic bottle cap mold in order to free the molded bottle cap. A demolding method achieved by the above demolding mechanism is also provided.

## Description

### Technical Field

The present invention relates to a manufacturing apparatus for plastic bottle, and more specifically relates to a demolding mechanism of a plastic bottle cap mold, and a method therefor.

### Background Art

Plastic bottle is a packaging container commonly used in modern daily life. Plastic bottle cap used in conjunction with the plastic bottle is an essential component and is therefore desired desperately in the market. Developments of modern manufacturing technology gradually reduce the size and wall thickness of a manufactured plastic bottle cap as the manufacturing technology becomes more advanced. Plastic bottle cap has also become a plastic product desired in terms of its practicality and its aesthetic nature. Nowadays, manufacturers of plastic packaging container have been improving their product structures and perfecting their manufacturing techniques in order to maintain their competitiveness, and this phenomenon is apparently reflected in shortened manufacturing cycle and improved manufacturing efficiency.

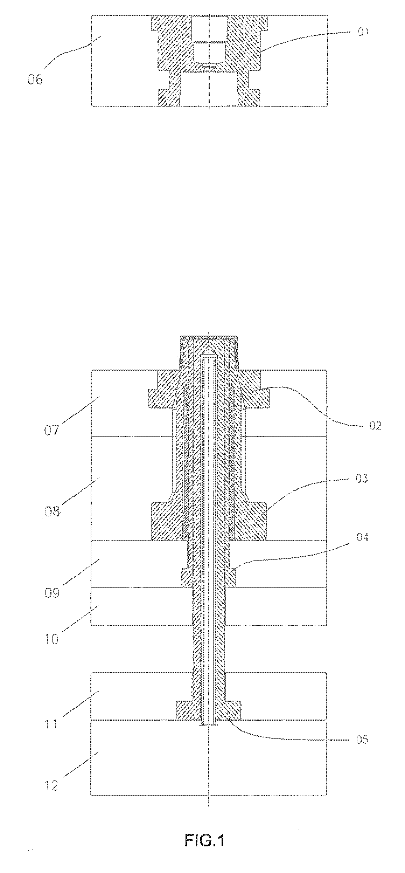

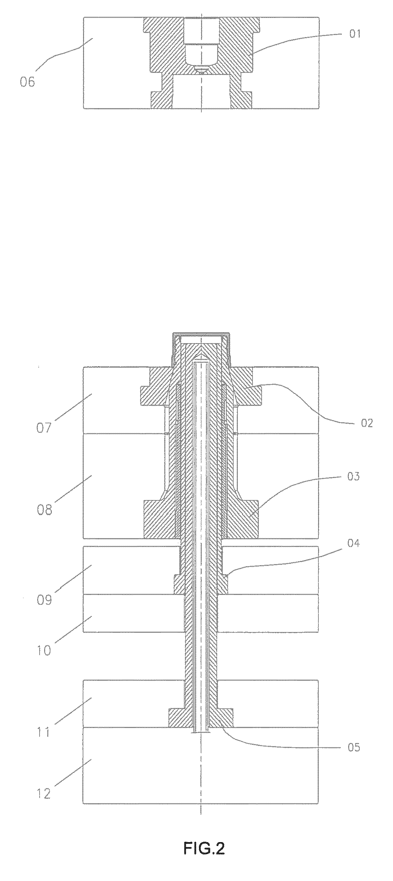

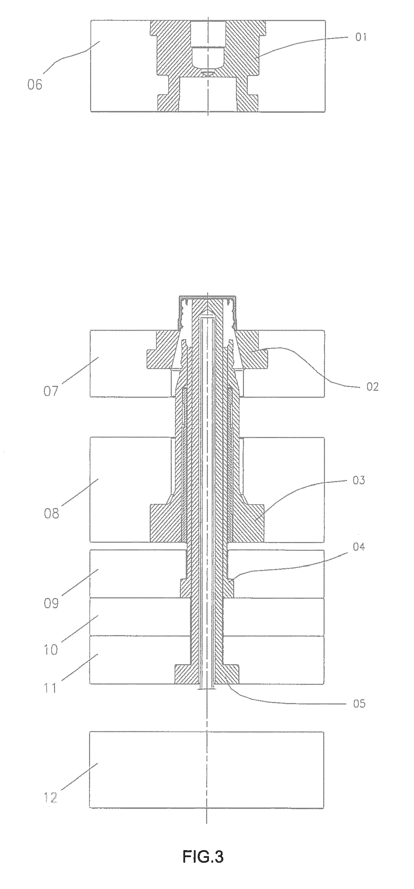

A cycle of manufacturing a plastic bottle cap comprises the following stages: mold closing, injection, holding, cooling, mold opening and ejecting. In this cycle, the stages of mold closing, injection, holding, cooling and mold opening are often limited by speed and time and thus allowing only little room for improvement and limited increase of manufacturing efficiency. Therefore, manufacturers of plastic bottle cap have been focusing their efforts to improve the stage of demolding and ejecting, and more primarily on demolding time and demolding mechanism. Remarkable improvement has been made particularly on demolding mechanism. An existing demolding mechanism of a plastic bottle cap mold as shown in FIG. 1 mainly comprises a shaping cavity 01, a demolding bush 02 below the shaping cavity 01, an outer core 03 inside the demolding bush 02, an inner core 04 inside the outer core 03, and a central ejection unit 05 inside the inner core 04. This kind of demolding mechanism works as follows: open a cavity plate 06 of the mold; when the mold is opened and at rest, eject plates 07 and 08 so that the outer core 03 ejects the product out until there is enough space to prevent deformation and damage of the inner sealing ring during subsequent ejection (as shown in FIG. 2); continue to eject the plate 07 and plate 11 so that the demolding bush 02 and the central ejection unit 05 advance to eject the product (as shown in FIG. 3). Due to relatively long operating distances of the demolding bush 02 and the central ejection unit 05 to eject the product, this kind of demolding mechanism has the following obvious disadvantages: 1. manufacturing cost is high because the mold in its entirety is too thick in a way that relatively heavier injection molding machine is required for processing; 2. undesired situation such as uneven bottle cap horizontal surface will be easily caused by ejecting operation of the central ejection unit 05, thereby affecting product quality, increasing defective product rate and reducing manufacturing efficiency; 3. relatively long operating distances of the demolding bush 02 and the central ejection unit 05 obviously increase manufacturing time, delay a manufacturing cycle and thereby reducing manufacturing efficiency in general.

When a mold for plastic bottle based on the above structure is adopted by plastic bottle cap manufacturing system commonly used according to existing technology, the mold has to be opened before activation of the ejecting apparatus of the mold to eject the bottle cap as described. Likewise, when the ejection is finished, the cores have to return to their original positions before the injection molding machine can start to close the mold again to perform the next manufacturing cycle. In a basic system having 48 mold cavities manufacturing caps of specification 30/25, the total time required for opening the mold, ejecting the product, resetting the cores and closing the mold in an existing apparatus is about 3 seconds, and the time for completing one entire manufacturing cycle is about 6 seconds.

In a more advanced plastic bottle cap manufacturing system in the prior art, improvement of mechanical structure and procedures allows the ejecting devices to be activated when the mold is partially opened and not yet fully opened. Likewise, mold closing operation is improved to be carried out at the same time when the cores return to their original positions. In the same bottle cap manufacturing system also having the same number of mold cavities, the total time required for opening the mold, ejecting the product, resetting the cores and closing the mold can be reduced to about 1.7 seconds, and the time for completing one entire manufacturing cycle is about 3.5 seconds.

It is an important object of research in this field of art to further shorten the time for completing a bottle cap manufacturing cycle effectively in order to further increase manufacturing efficiency through an inventive demolding mechanism and an inventive method of operating the demolding mechansim.

### Disclosure of the Invention

In view of the aforesaid disadvantages now present in the prior art, the present invention provides a demolding mechanism for mold of plastic bottle cap having a reasonable structure, a compact and small size, and achieving high manufacturing efficiency and producing products of good quality.

Another object of the present invention is to provide a demolding method for a mold of plastic bottle cap by using the demolding mechanism as described above.

The present invention adopts the following technical proposal: a demolding mechanism of a plastic bottle cap mold provided on a movable portion of the plastic bottle cap mold; the demolding mechanism comprises a supporting and place-giving device; the supporting and place-giving device is disposed corresponding to cores in the movable portion which are used for demolding so that each of the cores is fixed at a molding position during injection of a bottle cap and retreats during demolding of the plastic bottle cap mold in order to free the molded bottle cap.

The supporting and place-giving device comprises mainly two types of implementation. The first type of implementation fixes the cores at their molding positions during injection of the bottle cap, and then creates place-giving troughs when demolding is required after the bottle cap is molded so that the cores retreat into the place-giving troughs to free the bottle cap. The second type is known as direct-driven type, which performs supporting and place-giving functions by a driving unit directly connected with the cores or with a panel mounted with the cores.

The first type of implementation has a structure specifically comprising multiple supporting pieces on the movable portion and a backing plate provided with multiple place-giving troughs. The supporting pieces and the cores are fixedly connected via a panel. The backing plate is disposed corresponding to the supporting pieces. The backing plate is slidable with respect to the supporting pieces to achieve two different working positions, which are supporting position and place-giving position. When the backing plate is at the supporting position, the backing plate supports the supporting pieces, so that the cores are used for molding the bottle cap. When the backing plate is at the place-giving position, the supporting pieces insert into the place-giving troughs of the backing plate so that the cores retreat to free the bottle cap.

To facilitate sliding of the backing plate, the backing plate can be connected with and thus being driven by a driving unit such as a pneumatic cylinder, a hydraulic cylinder or an electrical motor; alternatively, the backing plate is connected with and thus being driven by a linkage mechanism of an injection molding machine.

A quantity of the supporting pieces is determined by the number of mold cavities and shape of the supporting pieces. The supporting pieces are distributed in each of the mold cavities so that each of the cores receives sufficient backing support.

Heights of the supporting pieces are not less than heights of the molded bottle cap so that the cores are provided with enough space to retreat.

In order to withdraw the supporting pieces from the place-giving troughs, panel driving units connected respectively with a corresponding panel are provided to exert force respectively to the corresponding panel so that the supporting pieces connected with the corresponding panel can be withdrawn from the place-giving troughs of the backing plate.

The panel driving units can be pneumatic cylinders, hydraulic cylinders or electrical motors, or can be a linkage mechanism of the injection molding machine.

The second type of implementation has a structure specifically comprising direct use of driving units such as pneumatic cylinders, hydraulic cylinders and electrical motors to move corresponding panels; the driving units fix the panels at their molding positions to support corresponding cores for injection of a bottle cap; when the cores have to retreat after the bottle cap is molded, the corresponding panels are directly moved by the driving units so as to drive the corresponding cores to retreat in order to free the bottle cap.

The cores constitute shaping surfaces of inner sides of the bottle cap. A circular demolding bush is provided at a surface of the movable portion corresponding to a circular flat surface of an opening at a bottom part of the bottle cap. The cores are disposed in a central part of the demolding bush. The cores are formed by one or multiple components. If multiple components are used, the multiple components comprise an outer core, an inner core and a central ejection unit. The inner core is provided at inner sides of the outer mold. The central ejection unit is provided inside the inner core. The outer core is used for shaping screw threads of the bottle cap and an outer part of an inner sealing ring of the bottle cap. The inner core is used for shaping an inner part of the inner sealing ring of the bottle cap. The outer core and the inner core are mounted to different panels. The outer core and the inner core are concentrically disposed. The outer core is slidable up and down along an outer circular surface of the inner core and its sliding space is determined by a distance of movement of a corresponding panel. The cores may only comprise the outer core and the inner core. The outer core shapes screw threads of the bottle cap and an outer part of an inner sealing ring of the bottle cap. The inner core shapes an inner part of the inner sealing ring of the bottle cap. The outer core sleeves an outer side of the inner core. The inner core is mounted on a panel while the outer core is freely disposed (without mounting to a panel). The outer core is slidable up and down along an outer circular surface of the inner core. A limiting member is provided on the inner core to limit the sliding distance of the outer core. When demolding is required during a manufacturing cycle, each of the cores can retreat into the movable portion from the molding position. Different cores may have different retreating strokes and different actuation times. In a set of mold, multiple sets of cores may be provided so as to provide multiple working cavities to manufacture bottle caps and perform demolding. The movable portion of the plastic bottle cap mold can be provided with one or multiple panels for mounting the cores. During a manufacturing cycle, the panels can move into the movable portion from molding positions. The panels can move with different distances into the movable portion to achieve corresponding demolding effect.

A demolding method of a plastic bottle cap mold by using the demolding mechanism as described comprises the following steps: During injection of the plastic bottle cap, the supporting and place-giving device supports the cores for demolding so that each of the cores is fixed at the molding position during injection of the bottle cap until the bottle cap is molded. When the molded bottle cap requires demolding, the supporting and place-giving device makes the cores retreat into the movable portion so as to separate the molded bottle cap from the cores. The molded bottle cap is stopped from further retreating by using the demolding bush to hold the molded bottle cap in position. Finally, the molded bottle cap is allowed to freely drop off.

The present invention has the following working principle: When injection of the bottle cap is completed, by means of using the supporting and place-giving device, the cores receive forces and move in a direction opposite to the direction which the cores move in the same process according to existing prior arts, and the bottle cap will be retained at its original position due to restrictions imposed by the demolding bush. The bottle cap and the cores are therefore separated and the demolding operation for the bottle cap is therefore accomplished.

The present invention has the following advantages and beneficial effects over the prior arts:
1. Mold opening operation and demolding operation for the molded bottle cap start at the same time. Demolding operation may even complete with the bottle cap being ejected before completion of the mold opening operation. Therefore, the present invention overcomes the problems of long manufacturing cycle and low manufacturing efficiency in the existing prior arts according to which the mold should be opened to a certain extent before ejecting apparatus can be activated. Although in some advanced system in the prior arts, mold opening operation and ejection operation of a molded product in the process of demolding can be performed at the same time, this kind of configuration is difficult taken into account the protection of the mold components, the need to provide a detection device in the mold and a specific operating logic of the machine. Likewise, the cores of the present invention reset forwardly when they receive forces, therefore the mold closing operation and the reset operation of the cores start at the same time and so there should be no worry about possible damage of the mold components due to delay in or incoordination of mold opening/closing operation and cores ejection/reset operation.
2. The present invention to a large extent shortens the travelling distance during mold opening operation compared with a conventional mold. For example, in a conventional bottle cap mold having 48 mold cavities, the mold opening operation of the mold involves a travelling distance of 150mm-200mm, and when it is worked in an advanced high-speed machine, the total time for mold opening and mold closing is about 1.7 seconds. In a mold according to the present invention, the mold opening operation of the mold involves a travelling distance only of 40mm-60mm, and the total time for mold opening and mold closing can be reduced to about 1.0 second. A reduction of 20% is achieved in a cycle of 3.5 seconds. Therefore, the present invention shortens a manufacturing cycle and increases manufacturing efficiency.
3. The present invention obviously shortens the overall travelling distance during mold opening and closing compared with existing prior arts. The present invention achieves a more reasonable and compact structure allowing obvious reduction of space required for manufacture. Also, the present invention can allow the use of smaller injection molding machine for manufacture in order to reduce the costs for manufacturing equipment and thus being more economical.
4. Demolding operation for the bottle cap is achieved in the present invention by the retreat of the cores. Compared with demolding operation for the bottle cap through ejection directly performed by the cores as in the existing prior arts, the demolding operation of the present invention exerts smaller forces to the bottle cap surfaces (the present invention can even exert no ejection forces to the bottle cap surfaces during demolding operation). This kind of demolding operation can effectively prevent the problem of uneven bottle cap flat surface easily caused by the demolding operation of the existing prior arts. Therefore, the present invention can increase the quality of a manufactured bottle cap and decrease defective product rate. The present invention is more qualified for high-speed, high quality and voluminous production.

### Brief Description of Drawings

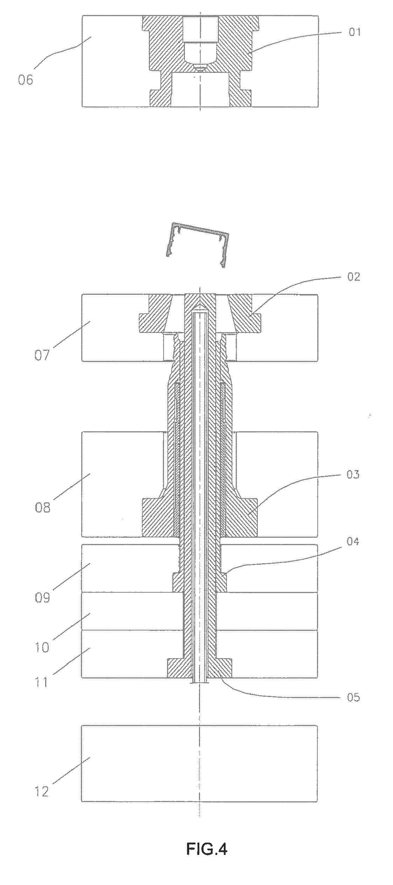

FIG. 1 to FIG.4 illustrate a working principle of a demolding mechanism in an existing prior plastic bottle cap mold.
FIG. 5 to FIG. 8 illustrate a working principle of a demolding mechanism according to the present invention.
FIG. 9 is a structural view showing a cross section along A-A shown in FIG. 5.
FIG. 10 is a structural view showing a cross section along A-A shown in FIG. 6.
FIG. 11 to FIG. 14 illustrate a working principle of a demolding mechanism of the present invention according to another embodiment.
FIG. 15 to FIG. 20 illustrate a working principle of a demolding mechanism of the present invention according to yet another embodiment.

### Best Mode for Carrying out the Invention

The present invention is further described in detail below with reference to some embodiments and the accompanying drawings. The present invention is not limited by the detailed description herein.

### Embodiment 1

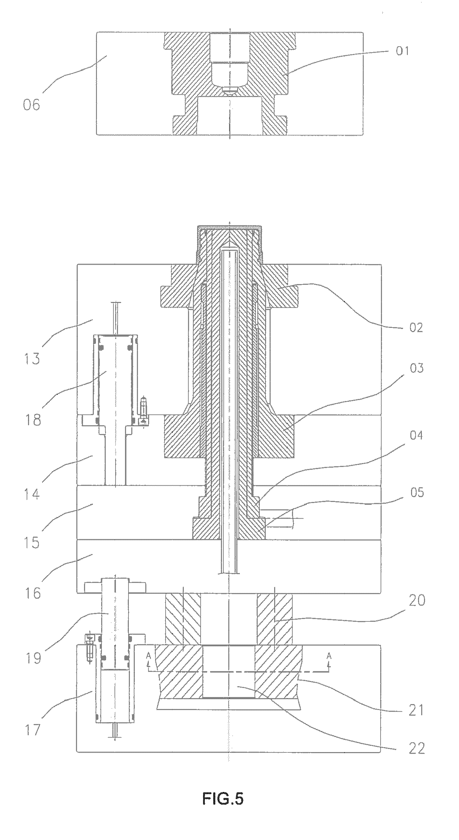

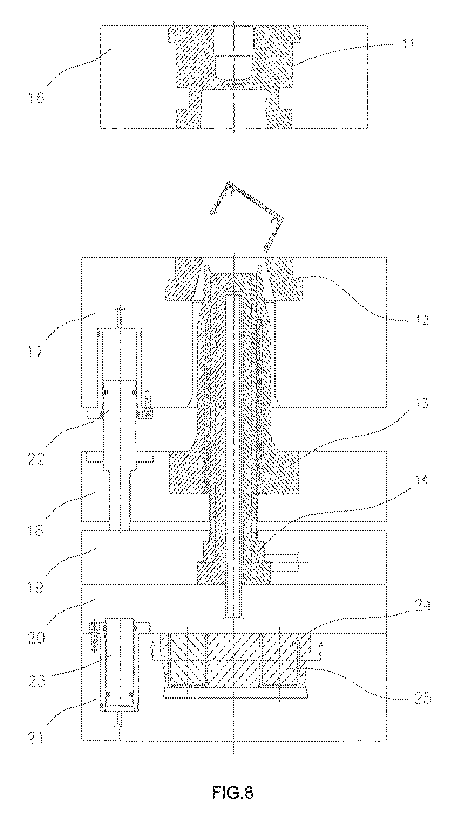

FIGs. 5-10 show a first embodiment of the present invention. As shown in FIG. 5, a demolding mechanism of a plastic bottle cap mold of the present invention is provided on a movable portion of the plastic bottle cap mold. The demolding mechanism comprises a supporting and place-giving device. The supporting and place-giving device is disposed corresponding to cores in the movable portion which are used for demolding so that each of the cores is fixed at a molding position during injection of a bottle cap and retreats during demolding of the plastic bottle cap mold in order to free the molded bottle cap.

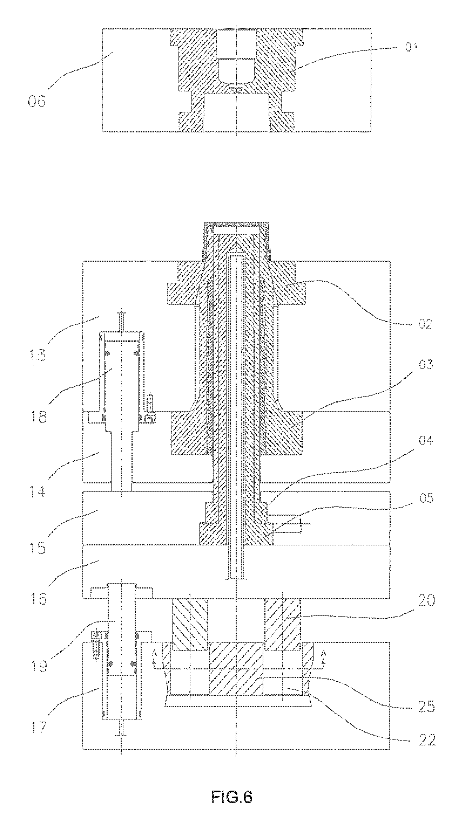

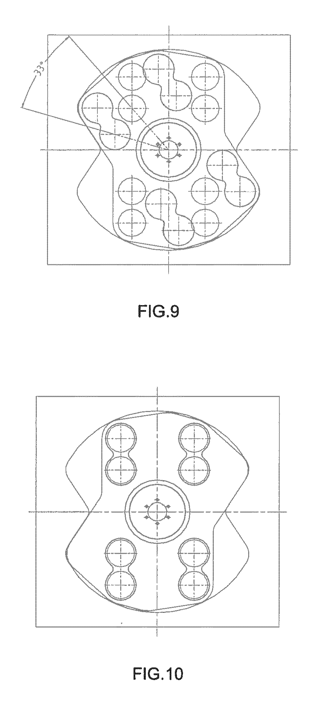

In particular, the supporting and place-giving device has a structure comprising eight supporting pieces 20 on the movable portion and a backing plate 21 provided with place-giving troughs 22. The supporting pieces 20 are fixed on a back side of a panel 16. A front side of the panel 16 is provided with cores. The backing plate 21 is disposed corresponding to the supporting pieces 20. The backing plate 21 is rotatably slidable with respect to the supporting pieces 20 to achieve two different working positions, which are supporting position and place-giving position. When the backing plate 21 is at the supporting position, the backing plate 21 supports the supporting pieces 20, so that the cores are used for injection of the bottle cap (as shown in FIGs. 5 and 9). When the backing plate is at the place-giving position, the supporting pieces 20 insert into the place-giving troughs 22 of the backing plate 21 so that panels 14, 15, 16 and the cores 03, 04, 05 retreat to free the bottle cap, as shown in FIGs. 6-8 and 10.

In order that the cores as mounted are maintained stably in their positions duringinjection, the panel 16 is not less than 25mm thick.

In molds with different number of mold cavities, a quantity of the supporting pieces 20 is determined by the number of mold cavities and shape of the supporting pieces 20. The supporting pieces 20 are distributed in each of the mold cavities so that each of the cores receives sufficient backing support. The supporting pieces 20 can be fixed on the back side of the panel 16 via screws, or can be tightly fitted thereto, or can be directly welded thereto, or can even be made as a one whole piece with the panel 16.

Heights of the supporting pieces 20 are not less than heights of the molded bottle cap so that the cores are provided with enough space to retreat. In order that the supporting pieces 20 bear equal forces, the heights of the supporting pieces 20 have an accuracy rate within +/-0.01 mm.

To facilitate sliding of the backing plate 21, the backing plate 21 can be connected with and thus being driven by a driving unit such as a pneumatic cylinder, a hydraulic cylinder or an electrical motor (in this embodiment, an electrical motor is used); alternatively, the backing plate 21 is connected with and thus being driven by linkage mechanism of an injection molding machine. To ensure that the backing plate 21 is completely positioned at the place-giving position when the panel 16 and the supporting pieces 20 retreat, and to ensure that it is also completely positioned at the supporting position when injection is performed during manufacture, the mold is provided with a device such as a sensor switch, an optical grating sensor or an electronic eye to monitor the position of the backing plate 21. Also, mechanical limiting devices are mounted at two directions according to which the backing plate 21 is rotatably slidable to achieve the two working positions so as to ensure accurate movement of the backing plate 21.

In order to withdraw the supporting pieces 20 from the place-giving troughs, panel driving units connected respectively with a corresponding panel are provided to exert force respectively to the corresponding panel so that the supporting pieces 20 connected with the panel 16 can be withdrawn from the place-giving troughs of the backing plate 21. The panel driving units can be pneumatic cylinders, hydraulic cylinders or electrical motors, or can be a linkage mechanism of the injection molding machine. In this embodiment, hydraulic cylinders 18 and 19 independently disposed and each having a single valve and working in a single direction are used as the panel driving units.

The cores constitute shaping surfaces of inner sides of the bottle cap. A circular demolding bush 02 is provided at a surface of the movable portion corresponding to a circular flat surface of an opening at a bottom part of the bottle cap. The cores are disposed in a central part of the demolding bush 02. The cores are formed by multiple components comprising an outer core 03, an inner core 04 and a central ejection unit 05. The inner core 04 is provided at inner sides of the outer mold 03. The central ejection unit 05 is provided inside the inner core 04. When demolding is required during a manufacturing cycle, each of the cores can retreat into the movable portion from the molding position. Different cores may have different retreating strokes and different actuation times. In a set of mold, multiple sets of cores may be provided so as to provide multiple working cavities to perform injection of bottle caps and perform demolding.

The movable portion is provided with multiple panels 14, 15, 16. The cores are mounted respectively to the multiple panels 14, 15, 16. The outer core 03 is connected with the panel 14, the inner core 04 is connected with the panel 15, and the central ejection unit is connected with the panel 16. In a manufacturing cycle, each of the panels 14, 15, 16 can move into the movable portion from a molding position. The panels 14, 15, 16 can move with different distances into the movable portion so as to attain an associated demolding effect.

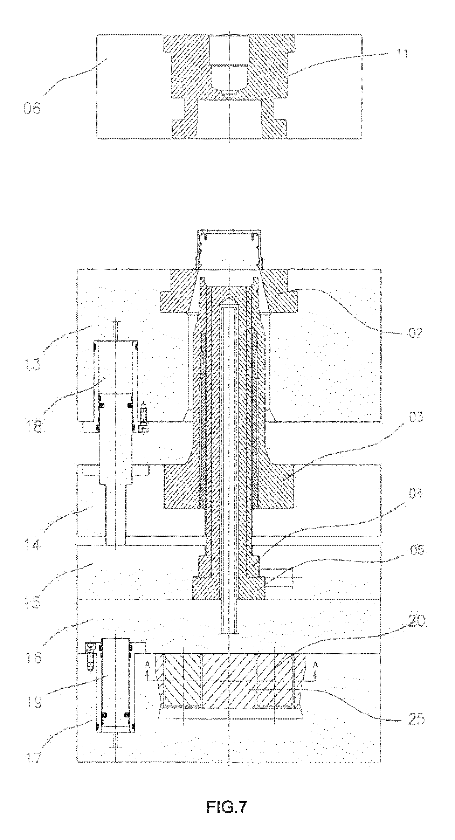

A demolding method of a plastic bottle cap mold by using the demolding mechanism as described comprises the following steps: During injection of the plastic bottle cap, the backing plate 21 is driven by the electrical motor (not shown in the figures) to slide to the supporting position to support the supporting pieces 20 so that each of the cores (outer core 03, inner core 04 and central ejection unit 05) are fixed at the molding position during manufacture of the bottle cap until the bottle cap is molded (as shown in FIG. 5). When the molded bottle cap requires demolding, the backing plate 21 is driven by the electrical motor to slide to the place-giving position so that the supporting pieces 20 correspond to the place-giving troughs 22 of the backing plate 21 (as shown in FIG. 6); under the effect of the hydraulic cylinder 18, the supporting pieces 20 insert into the place-giving troughs 22 of the backing plate 21 so that the panels 14, 15 and 16 can fully retreat; the inner core 04, the central ejection unit 05 and the outer core 03 retreat one by one from the shaping surfaces of the inner sides of the bottle cap into the movable portion (the inner core 04 and the central ejection unit 05 are first withdrawn from the bottle cap as shown in FIG. 6, and then the outer mold 03 is withdrawn from the bottle cap as shown in FIG. 7); the bottle cap is then retained by the demolding bush 02 at its original position and the demolding effect of the bottle cap is achieved. After demolding, the hydraulic cylinder 17 pushes the panels 14, 15, 16 forward to reset their positions so that the cores (the outer core 03, the inner core 04 and the central ejection unit 05) return to their respective molding positions; also, the supporting pieces 20 are withdrawn from the place-giving troughs 22 of the backing plate 21 and the electrical motor drives the backing plate 21 to return to the supporting position to complete a manufacturing cycle.

### Embodiment 2

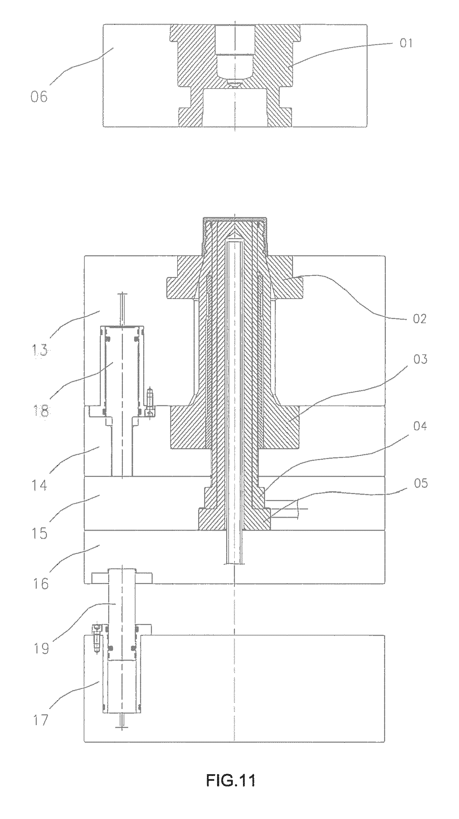

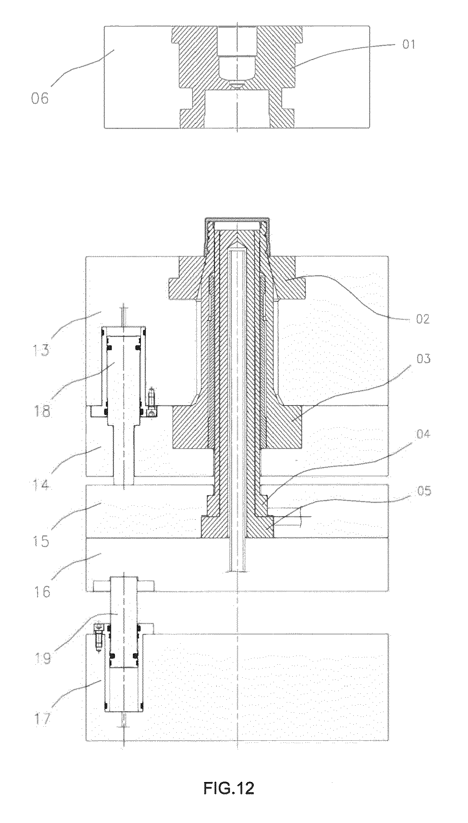

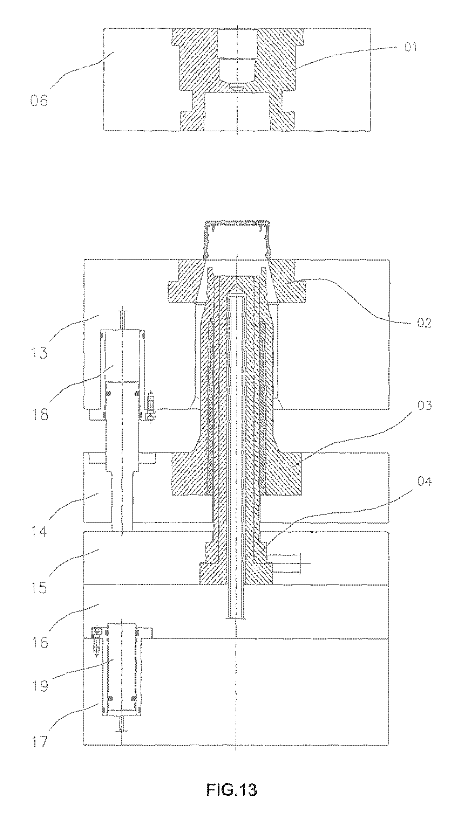

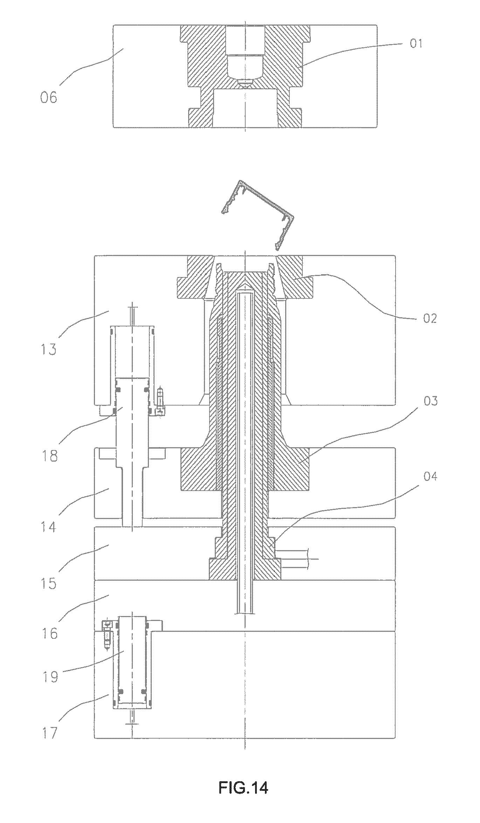

FIGs. 11-14 show a second embodiment of the present invention. As shown in FIG. 11, when the mold is used for injection of a bottle cap, a space is left between panel 16 and panel 17. The panel 16 receives forces from the hydraulic cylinder 19 (multiple hydraulic cylinder may also be used) so that it can maintain the cores 03, 04, 05 at their molding positions during injection in a way that the cores 03, 04, 05 will not be pushed back by injection pressure. After the bottle cap is molded, the hydraulic cylinder 19 can withdraw its forces and another hydraulic cylinder 18 will then push the panels 14, 15, 16 to cause the cores to retreat backward and to achieve demolding effect for the bottle cap according to the same working principle as in embodiment 1.

### Embodiment 3

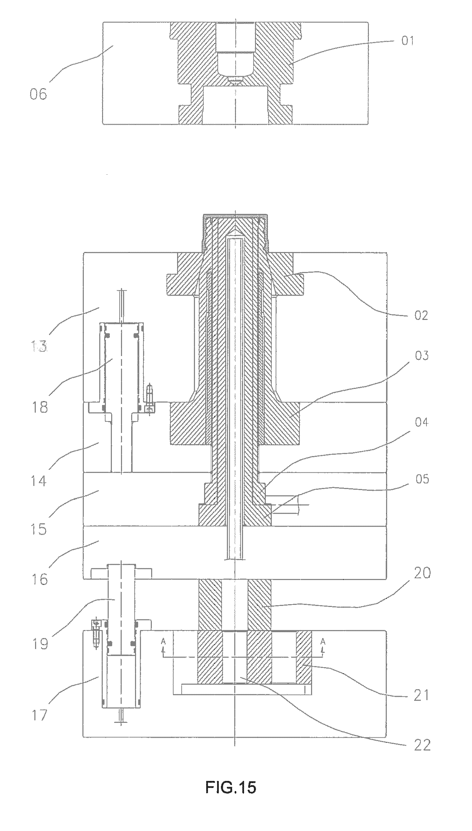

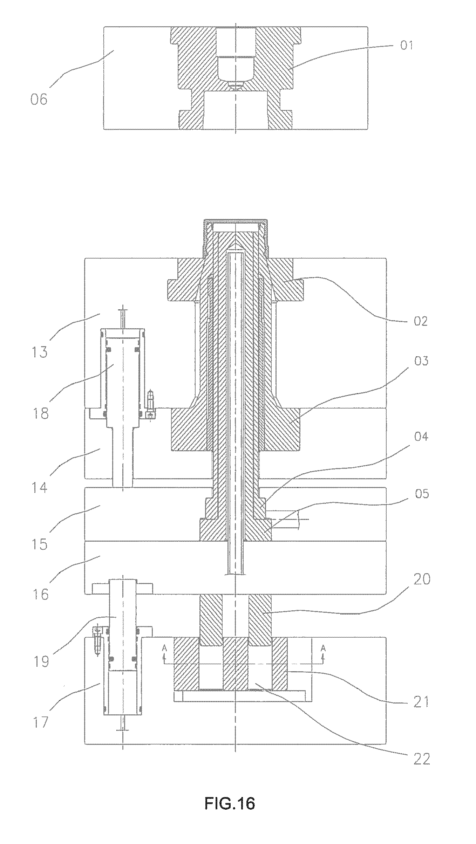

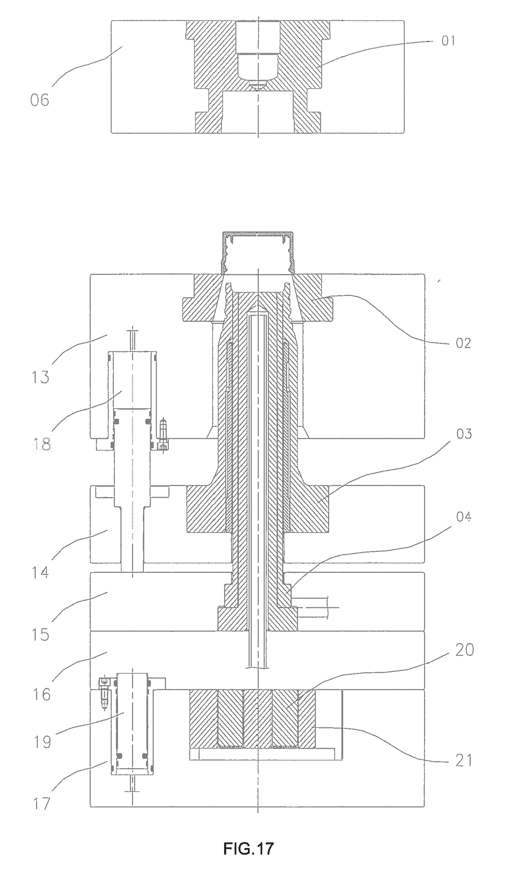

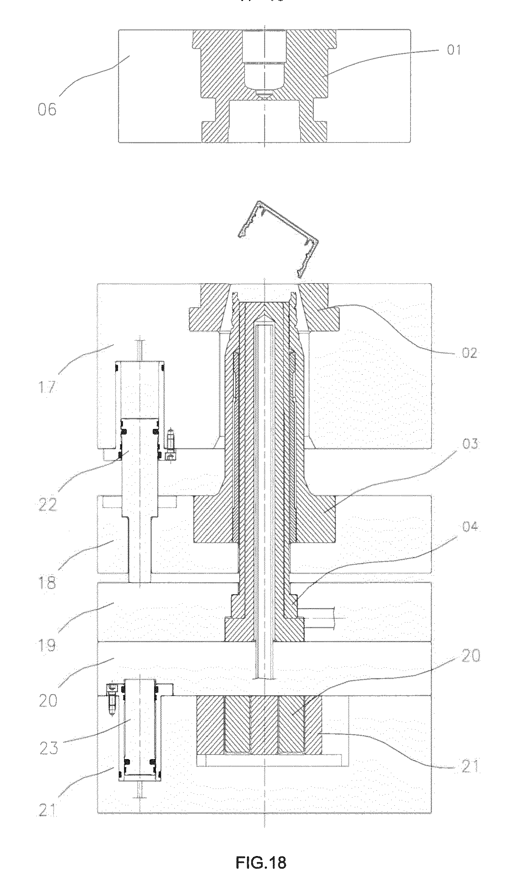

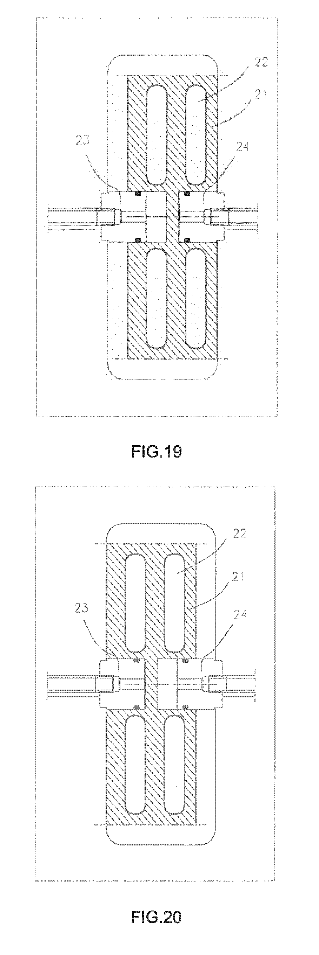

FIGs. 15-20 show a third embodiment of the present invention. Embodiment 3 is the same as embodiment 1 except for the following features: the supporting pieces 20 as shown in FIGs. 15-16 and the place-giving troughs 22 as shown in FIG. 20 are elongated and vertically parallel to one another. By using a pneumatic cylinder, a hydraulic cylinder or an electrical motor to drive the backing plate 21 to perform linear movement, the backing plate 21 can alternate between the supporting position (FIG. 15) and the place-giving position (FIG. 16).

### Embodiment 4

Embodiment 4 is the same as embodiment 1 except for the following features: The cores only comprise the outer core and the inner core. The outer core shapes the screw threads of the bottle cap and an outer part of an inner sealing ring of the bottle cap. The inner core shapes an inner part of the inner sealing ring of the bottle cap. The outer core sleeves an outer side of the inner core. The inner core is mounted on a panel while the outer core is freely disposed without mounting to a panel. The outer core is slidable up and down along an outer circular surface of the inner core. A limiting member is provided on the inner core to limit the sliding distance of the outer core. When the cores have to retreat backward, the inner core will first move along with the panel so as to withdraw itself from the molded bottle cap; since the outer core is freely disposed and slidable with respect to the inner core, the outer core still engages with the molded bottle cap when the inner core is withdrawn; when the inner core moves to a predetermined position along with the panel in order to be free from the inner sealing ring, the limiting member on the inner core contacts with the outer core to drive the outer core to move along with the inner core and the panel so as to be withdrawn from the molded bottle cap to complete demolding operation of the bottle cap.

The embodiments described above are preferred embodiments of the present invention. However, the present invention is not limited to the above described embodiments. Any other changes, modification, replacement, combination and simplification of the present invention without deviating from the inventive concept and principle of the present invention should be considered alternative implementations of the present invention with equal effect and should therefore fall within the scope of protection of the present invention.

## Claims

1. A demolding mechanism of a plastic bottle cap mold, wherein the demolding mechanism is provided on a movable portion of the plastic bottle cap mold; the demolding mechanism comprises a supporting and place-giving device; the supporting and place-giving device is disposed corresponding to cores in the movable portion which are used for demolding; each of the cores is fixed at a molding position during injection of a bottle cap and retreats during demolding of the plastic bottle cap mold in order to free the molded bottle cap.

2. The demolding mechanism of a plastic bottle cap mold as in Claim 1, wherein the supporting and place-giving device fixes the cores at their molding positions during injection of the bottle cap, and then creates place-giving troughs when demolding is required after the bottle cap is molded so that the cores retreat into the place-giving troughs to free the bottle cap.

3. The demolding mechanism of a plastic bottle cap mold as in Claim 2, wherein the supporting and place-giving device has a structure comprising multiple supporting pieces on the movable portion and a backing plate provided with the place-giving troughs; the supporting pieces and the cores are fixedly connected via a first panel; the backing plate is disposed corresponding to the supporting pieces; the backing plate is slidable with respect to the supporting pieces to achieve two different working positions, which are supporting position and place-giving position; when the backing plate is at the supporting position, the backing plate supports the supporting pieces, so that the cores are used for injection of the bottle cap; when the backing plate is at the place-giving position, the supporting pieces insert into the place-giving troughs of the backing plate so that the cores retreat to free the bottle cap.

4. The demolding mechanism of a plastic bottle cap mold as in Claim 2, wherein the supporting and place-giving device is a direct-driven type, which performs supporting and place-giving functions by a driving unit directly connected with the cores or with a first panel mounted with the cores.

5. The demolding mechanism of a plastic bottle cap mold as in Claim 3, wherein the backing plate is connected with and thus being driven by a pneumatic cylinder, a hydraulic cylinder or an electrical motor, or the backing plate is connected with and thus being driven by a linkage mechanism of an injection molding machine.

6. The demolding mechanism of a plastic bottle cap mold as in Claim 3, wherein panel driving units connected with panels including the first panel are provided to exert force respectively to the panels including the first panel; the supporting pieces connected with the first panel are withdrawn from the place-giving troughs of the backing plate.

7. The demolding mechanism of a plastic bottle cap mold as in Claim 4, wherein pneumatic cylinders, hydraulic cylinders or electrical motors are used to directly move corresponding panels including the first panel to fix the panels including the first panel at their molding positions to support the cores correspondingly for injection of a bottle cap; when the cores have to retreat after the bottle cap is molded, the corresponding panels including the first panel are directly moved by the pneumatic cylinders, hydraulic cylinders or electrical motors so as to drive the cores correspondingly to retreat in order to free the bottle cap.

8. The demolding mechanism of a plastic bottle cap mold as in Claim 1, wherein the cores constitute shaping surfaces of inner sides of the bottle cap; a circular demolding bush is provided at a surface of the movable portion corresponding to a circular flat surface of an opening at a bottom part of the bottle cap; the cores are disposed in a central part of the demolding bush; the cores are formed by one or multiple components.

9. The demolding mechanism of a plastic bottle cap mold as in Claim 8, wherein the cores comprise an outer core, an inner core and a central ejection unit; the inner core is provided at inner sides of the outer mold; the central ejection unit is provided inside the inner core; the outer core and the inner core are mounted to different panels; the outer core and the inner core are concentrically disposed; the outer core is slidable up and down along an outer circular surface of the inner core; a sliding space of the outer core is determined by a distance of movement of a corresponding panel.

10. The demolding mechanism of a plastic bottle cap mold as in Claim 8, wherein the cores comprise an outer core and an inner core; the outer core sleeves an outer side of the inner core; the inner core is mounted on a panel while the outer core is freely disposed; the outer core is slidable up and down along an outer circular surface of the inner core; a limiting member is provided on the inner core to limit sliding distance of the outer core.

11. The demolding mechanism of a plastic bottle cap mold as in Claim 8, wherein multiple sets of cores are provided so as to provide multiple working cavities to manufacture bottle caps and perform demolding; the movable portion of the plastic bottle cap mold is provided with one or multiple panels for mounting the cores; during a manufacturing cycle, the panels move into the movable portion from their molding positions to achieve corresponding demolding effect.

12. A demolding method achieved by the demolding mechanism of a plastic bottle cap mold as in Claim 1 comprises the following steps: supporting the cores for demolding by using the supporting and place-giving device during injection of the plastic bottle cap so that each of the cores is fixed at the molding position during injection of the bottle cap until the bottle cap is molded; using the supporting and place-giving device to let the cores retreat into the movable portion to separate the molded bottle cap from the cores when the molded bottle cap requires demolding; stopping the molded bottle cap from further retreating by holding the molded bottle cap in position via a demolding bush; allowing the molded bottle cap to freely drop off.
